# EUROPÄISCHE PATENTANMELDUNG

(11) **EP 4 178 102 A1**
(43) Veröffentlichungstag der Anmeldung: **10.05.2023**
(21) Anmeldenummer: 22203209.6
(22) Anmeldetag: 24.10.2022
(51) Int. Cl.: H02P 21/05

(54) **VERFAHREN ZUM BETREIBEN EINES ELEKTROMOTORS EINES VERDICHTERS EINER WÄRMEPUMPE, COM-PUTERPROGRAMM, SPEICHERMEDIUM, STEUERGERÄT UND WÄRMEPUMPE**

(30) Priorität: 05.11.2021 DE 102021128779
(71) Anmelder: Vaillant GmbH, 42859 Remscheid NRW (DE)
(72) Erfinder: Wohlfeil, Arnold, 42799 Leichlingen (DE); Trenkmann, Bettina, 58456 Witten (DE); Roth, Stefan, 42897 Remscheid (DE); Navarette, Jose Acedo, 01010 Vitoria (ES); Berganzo, Javier, 01002 Vitoria-Gasteiz (ES); Zabier, Asier, 01015 Vitoria-Gasteiz (ES); Gerold, Johannes, 80337 München (DE); Marggrander, Jens, 61389 Schmitten (DE); Köhler, Robert, 64653 Lorsch (DE)
(74) Vertreter: Popp, Carsten

(57) **Zusammenfassung**

Es wird ein Verfahren zum Betreiben eines Elektromotors (9) eines Verdichters (2) einer Wärmepumpe (1) vorgeschlagen, umfassend zumindest die folgenden Schritte:
a) Inbetriebnahme des Elektromotors (9),
b) Ermitteln eines Gegen-Drehmomentes des Verdichters (2), anhand eines Drucks und einer Temperatur des Kältemittels vor und nach dem Verdichter,
c) Bestimmen eines Drehmomentversatzes zwischen dem vom Elektromotor (9) aufgebrachtem Drehmoment und dem ermittelten Gegen-Drehmoment des Verdichters (2),
d) Betreiben des Elektromotors (9) derart, dass der in Schritt c) ermittelte Drehmomentversatz kompensiert wird.

Das Verfahren dient zur Minderung von Vibrationen und verbundenen Geräuschemissionen beim Betreiben eines Elektromotors (9) eines Verdichters (2) einer Wärmepumpe (1). Eine Minderung der Vibrationen kann vorteilhaft auch eine Verlängerung der Standzeit des Elektromotors (9) bewirken, da beispielsweise die schädigende Wirkung der Vibrationen auf die Lager des Elektromotors (9) vermieden werden kann.

## Beschreibung

Die Erfindung betrifft ein Verfahren zum Betreiben eines Elektromotors eines Verdichters einer Wärmepumpe, ein Computerprogramm, ein Speichermedium, ein Steuergerät und eine Wärmepumpe.

Wärmepumpen gewinnen für die Wärmeversorgung von Gebäuden zunehmend an Bedeutung. Zumeist weisen Wärmepumpen einen Kältemittelkreis zum Wärmetransport auf, der einen Kompressor umfasst. Der Kompressor wird häufig von einem Elektromotor angetrieben, der bedingt durch die Ausführung der Motorwicklung eine Drehmomentwelligkeit (auch als "torque ripple" bezeichnet) aufweisen kann. Eine Drehmomentwelligkeit bezeichnet Abweichungen des vom Elektromotor aufgebrachten Drehmomentes innerhalb einer Umdrehung desselben. Auch der Kompressor selbst weist bauartbedingt eine Drehmomentwelligkeit auf, also gleichfalls eine Ungleichverteilung des aufzubringenden (Antriebs-)Drehmomentes innerhalb einer Umdrehung der Antriebswelle. Die Drehmomentwelligkeit von Verdichter und Elektromotor führt zu einer Erhöhung und Minderung der Winkelgeschwindigkeit der Antriebswelle innerhalb einer Umdrehung derselben verbunden mit erhöhten Geräuschemissionen und einer geminderten Standfestigkeit des Elektromotors bzw. des Verdichters, beispielsweise aufgrund von vibrationsbedingten erhöhten Belastungen der Lagerungen. Dabei kann die Drehmomentwelligkeit des Elektromotors die Kompensation der Drehmomentwelligkeit des angetriebenen Verdichters durch eine gezielte präzise Ansteuerung (Umrichtersteuerung) des Elektromotors verhindern.

Zur Lösung dieses Problems kann eine Leistungselektronik mit variablen Frequenzumrichtern vorgesehen sein. Eine derartige Leistungselektronik mit Pulsweitenmodulation für einen Motor einer Wärmepumpe wird beispielsweise in der JP 2008 072 802 A vorgeschlagen. Diese Lösung kann eine Drehmomentwelligkeit und verbundene negative Effekte jedoch nicht vollständig kompensieren.

Die US 2010/0119378 A1 wird ein Schraubenverdichter vorgestellt, bei dem ein Ausgangsdrehmoment des Elektromotors des Verdichters an ein Lastdrehmoment des Verdichters angepasst wird.

Auch die US 4 604 036 A ebenso wie die US 4,726,738 A offenbaren Verfahren, in dem das Ausgangsdrehmoment des Elektromotors eines Kompressors an das Lastdrehmoment angepasst wird.

Die genannten Lösungen nutzen zur Feststellung von Unterschieden zwischen Last-und Ausgangsmoment die Signale von Vibrationsdetektoren. Somit ist der Einsatz zusätzlicher Sensorik notwendig, wobei die detektierten Vibrationen nicht zwangsläufig von Unterschieden in Last- und Ausgangsmoment, sondern beispielsweise auch von einem Lagerschaden verursacht sein können, was zu Fehlfunktionen führen kann.

Hiervon ausgehend ist es Aufgabe der Erfindung, ein Verfahren zum Betreiben eines Elektromotors eines Verdichters einer Wärmepumpe vorzuschlagen, das die geschilderten Probleme des Standes der Technik zumindest teilweise überwindet. Insbesondere soll ein geräusch- und vibrationsarmer Betrieb eines Verdichters in allen Lastbereichen ermöglicht werden.

Zudem soll die Erfindung bei einem Großteil der bestehenden Wärmepumpenanlagen einsetzbar sein und die Komplexität einer Wärmepumpe zumindest nicht wesentlich erhöhen.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zum Betreiben eines Elektromotors eines Verdichters einer Wärmepumpe bei, umfassend zumindest die folgenden Schritte:
a) Inbetriebnahme des Elektromotors,
b) Ermitteln eines Gegen-Drehmomentes des Verdichters,
c) Bestimmen eines Drehmomentversatzes zwischen dem vom Elektromotor aufgebrachtem Drehmoment und dem ermittelten Gegen-Drehmoment des Verdichters,
d) Betreiben des Elektromotors (9) derart, dass der in Schritt c) ermittelte Drehmomentversatz kompensiert wird.

Bei einem regulären Verfahrensablauf können die Schritte a), b), c) und d) zumindest einmal in der angegebenen Reihenfolge durchgeführt werden.

Das Verfahren dient zur Minderung von Vibrationen und verbundenen Geräuschemissionen beim Betreiben eines Elektromotors eines Verdichters einer Wärmepumpe. Eine Minderung der Vibrationen kann vorteilhaft auch eine Verlängerung der Standzeit des Elektromotors bewirken, da beispielsweise die schädigende Wirkung der Vibrationen auf die Lager des Elektromotors vermieden werden kann.

Die Wärmepumpe kann eine beliebige Wärmepumpe sein, aufweisend einen Kältekreislauf, in dem ein Kältemittel umgewälzt werden kann. Durch einen Phasenwechsel in einem Verdampfer und einem Kondensator (Verflüssiger) des Kältemittelkreislaufes kann ein Wärmetransport von einem Entnahmemedium, beispielsweise Erdboden, Umgebungsluft oder Grundwasser zu einem Abgabepunkt, häufig einem zu versorgenden Gebäude, bewirkt werden. Ein Verdichter und ein Expansionsventil können die notwendigen Druckunterschiede für den Phasenwechsel des Kältemittels erzeugen.

Durch den Verdichter im Kältemittelkreis kann das gasförmige Kältemittel komprimiert, dessen Druck somit erhöht werden, wodurch gleichzeitig dessen Temperatur ansteigt. Im sich anschließenden Verflüssiger kann das gasförmige Kältemittel sich abkühlen und Wärme über einen mit dem Verflüssiger in Wirkverbindung stehenden Wärmetauscher beispielsweise in einen Heizkreislauf eines Gebäudes übertragen. Das nunmehr in flüssiger Phase vorliegende Kältemittel wird nun zu einem Expansionsventil (auch als Drossel bezeichnet) geführt und entspannt sich dort, wobei es sich dabei weiter abkühlt. In einem nachfolgenden Verdampfer kann das Kältemittel Wärme aus einem Umgebungsmedium (Umgebungsluft, Grundwasser oder Erdwärme) aufnehmen und sich erwärmen, bevor es erneut dem Verdichter zugeführt werden kann. Zur Aufrechterhaltung dieses Prozesses muss Energie durch den Verdichter zugeführt werden. Der Verdichter wird in der Regel von einem Elektromotor angetrieben, der mit einem hier vorgestellten Verfahren vorteilhaft zu betreiben ist. Bei der Anwendung in einem Kältemittelkreis einer Wärmepumpe kommen insbesondere Scroll- oder Rollkolbenkompressoren zum Einsatz.

Bei dem den Verdichter antreibenden Elektromotor kann es sich um einen beliebigen Elektromotor handeln. Diese weisen in der Regel einen Rotor und einen Stator auf, wobei der Stator den feststehenden, magnetisch wirkenden Teil des Elektromotors darstellt, um oder in dem (bezogen auf eine Drehachse des Elektromotors) der Rotor drehbeweglich angeordnet sein kann. Der Rotor kann dabei schaltbare Spulen umfassen, die mit Permanentmagneten oder gleichfalls Spulen auf dem Stator derart magnetisch in Wirkverbindung stehen, dass ein Drehmoment auf den Rotor erzeugt wird, wobei auch eine umgekehrte Anordnung möglich ist.

Gemäß einem Schritt a) kann eine Inbetriebnahme des Elektromotors des Verdichters der Wärmepumpe erfolgen. Die Inbetriebnahme kann beispielsweise mit Volllast erfolgen.

Gemäß einem Schritt b) kann ein Gegen-Drehmoment des Verdichters ermittelt werden. Das Ermitteln kann dabei insbesondere unter Einbeziehung von Betriebsdaten des Kältemittelkreises und des Verdichters erfolgen, insbesondere einem Druck und einer Temperatur des Kältemittels vor und nach dem Verdichter. Beispielsweise kann das Gegen-Drehmoment für durch Messung eines Referenzmotors und -verdichters ermittelt werden. Dies kann insbesondere für verschiedene Betriebszustände erfolgen, die durch das Druckverhältnis des Verdichters, das durch Verdampfungs- und Kondensationstemperatur des Kältemittels im Kältemittelkreis gekennzeichnet sein kann, definiert werden können. Ein so ermitteltes Gegen-Drehmoment, bzw. eine Funktion des Gegen-Drehmomentes für verschiedene Betriebszustände kann beispielsweise auf einem Speicher einer verfahrensdurchführenden Einrichtung, wie einem Steuergerät, hinterlegt sein. Somit kann eine Durchführung des Schrittes b) auch in einem Auslesen des Gegen-Drehmomentes von einer Speichereinheit bestehen.

Dabei kann ein Ermitteln des Gegen-Drehmomentes in Schritt b) mittels einer Datenbank oder künstlicher Intelligenz erfolgen. Eine Datenbank kann für verschiedene Betriebsdaten der Wärmepumpe bzw. des Kältemittelkreises ein zu erwartendes Gegen-Drehmoment ermitteln.

Gemäß einer vorteilhaften Ausgestaltung kann eine Nutzung künstlicher Intelligenz in Schritt b) unter Einbeziehung eines Field Programmable Gate Array (FGPA) erfolgen. Ein FGPA kann sehr gut für ein schnelles Ermitteln eines Gegen-Drehmomentes optimiert werden und ist zudem kostengünstiger als ein (Standard-)Prozessor erhältlich.

Gemäß Schritt c) kann ein Bestimmen eines Drehmomentversatzes zwischen dem vom Elektromotor aufgebrachtem Drehmoment und dem ermittelten Gegen-Drehmoment des Verdichters erfolgen. Der Drehmomentversatz kann als Differenz der beiden Größen verstanden werden. Das vom Elektromotor aufgebrachte Drehmoment kann anhand einer Auswertung von Betriebsparametern des Elektromotors bestimmt werden, beispielsweise mittels dessen Leistungsaufnahme, insbesondere des umgesetzten elektrischen Stroms (Motorstrom). Der Zusammenhang zwischen dem vom Elektromotor aufgebrachten Drehmoment und dem Motorstrom kann zudem durch die Temperatur des Elektromotors beeinflusst werden, und somit kann eine Einbeziehung der Temperatur des Elektromotors in die Bestimmung des aufgebrachten Drehmomentes sinnvoll sein. Der Motorstrom kann insbesondere in Bezug auf die Rotorposition des Elektromotors betrachtet werden. So kann in einer Rotorposition in Feldschwäche das aufgebrachte Drehmoment klein im Vergleich zum Motorstrom sein.

Gemäß einem Schritt d) kann ein Betreiben des Elektromotors derart erfolgen, dass der in Schritt c) ermittelte Drehmomentversatz kompensiert wird. Hierzu kann der Elektromotor beispielsweise durch eine Umrichtersteuerung derart betrieben werden, dass der Drehmomentversatz ausgeglichen wird und Elektromotor und Verdichter mit einer konstanten Winkelgeschwindigkeit rotieren. Somit können eine Beschleunigung und ein Abbremsen des Elektromotors und des Verdichters innerhalb einer Umdrehung und einhergehende Vibrationen und Geräuschentwicklungen wirkungsvoll vermieden werden.

Gemäß einer weiteren vorteilhaften Ausgestaltung kann ein hier vorgeschlagenes Verfahren unter Einsatz eines Elektromotors mit besonders geringer Drehmomentwelligkeit durchgeführt werden. So kann bei einem Drehmomentversatz darauf geschlossen werden, dass dieser durch den Verdichter ausgelöst wird und der Elektromotor im Schritt d) entsprechend gesteuert betrieben werden. Unterschiedliche Harmonische in der Drehmomentwelligkeit ausgelöst durch Elektromotor und Verdichter können so vermieden werden.

Gemäß einer vorteilhaften Ausgestaltung kann in einem Schritt e) eine Abweichung zwischen dem in Schritt b) ermittelten Gegen-Drehmoment und dem realen Gegen-Drehmoment mit einem Grenzwertbereich verglichen werden. Der Grenzwertbereich bezeichnet dabei einen Bereich, der einen Normalbetrieb kennzeichnet. Ein Verlassen dieses Bereichs kann auf eine Veränderung am Elektromotor, dem Verdichter oder anderen Komponenten hinweisen. Diese Veränderung bzw. eine Drift der Abweichung kann häufig ein Anzeichen für einen (fortgeschrittenen) Verschleißzustand einer beteiligten Komponente der Wärmepumpe, insbesondere des Elektromotors sein.

Gemäß einer vorteilhaften Ausgestaltung kann beim Feststellen einer Abweichung (des in Schritt b) ermittelten Gegen-Drehmoments vom realen Gegendrehmoment) außerhalb des Grenzbereiches eine Information hierzu bereitgestellt oder versandt werden. Insbesondere kann eine Information in einem Netzwerk, insbesondere dem Internet, zum Abruf bereitgestellt oder als Nachricht versandt werden. Beispielsweise wird so ermöglicht einen Fachbetrieb zu informieren und dieser kann einen Wartungstermin planen und durchführen. Vorteilhaft wird so dazu beigetragen einen sich ankündigenden Ausfall einer Komponente der Wärmepumpe frühzeitig zu erkennen und zu beheben und ein Ausfall der Wärmepumpe kann so vermieden werden.

Nach einem weiteren Aspekt der Erfindung wird auch ein Computerprogramm vorgeschlagen eingerichtet zur Durchführung eines hier vorgeschlagenen Verfahrens. Dies betrifft mit anderen Worten insbesondere ein Computerprogramm (-produkt), umfassend Befehle, die bei Ausführung des Computerprogramms einen Computer veranlassen, ein hier vorgeschlagenes Verfahren durchzuführen.

Nach einem weiteren Aspekt wird auch ein maschinenlesbares Speichermedium vorgeschlagen, auf dem ein hier vorgeschlagenes Computerprogramm gespeichert ist.

Regelmäßig handelt es sich bei dem maschinenlesbaren Speichermedium um einen computerlesbaren Datenträger.

Nach einem weiteren Aspekt wird auch ein Steuergerät für eine Wärmepumpe vorgeschlagen, eingerichtet zur Durchführung eines hier vorgeschlagenen Verfahrens. Das Steuergerät kann hierzu beispielsweise einen Prozessor aufweisen oder über diesen verfügen. Der Prozessor kann ein, beispielsweise auf einem Speicher des Steuergeräts hinterlegtes, und hier vorgestelltes Verfahren ausführen. Auf dem Speicher des Steuergerätes können zudem ein Grenzwertbereich zur Durchführung des Schrittes e) sowie Daten zur Ermittlung des Gegen-Drehmomentes nach Schritt b) hinterlegt sein.

Nach einem weiteren Aspekt wird auch eine Wärmepumpe aufweisend ein hier vorgestelltes Steuergerät vorgeschlagen.

Hier werden somit ein Verfahren zum Betreiben eines Elektromotors eines Verdichters einer Wärmepumpe, ein Computerprogramm, ein Speichermedium, ein Steuergerät und eine Wärmpumpe angegeben, welche die mit Bezug auf den Stand der Technik geschilderten Probleme zumindest teilweise lösen. Insbesondere trägt die Erfindung zumindest dazu bei, einen verschleißarmen Betrieb eines Elektromotors eines Verdichters einer Wärmepumpe mit geringen Geräuschemissionen zu ermöglichen. Als besonders vorteilhaft kann die einfache Durchführbarkeit des Verfahrens angesehen werden, die keine, oder nur unwesentliche, bauliche Veränderungen an einer Wärmepumpe, bzw. des Verdichters oder des Elektromotors erfordert.

Zudem kann die Erfindung einfach, gegebenenfalls nur durch eine softwareseitige Implementation, an Bestandsgeräten umgesetzt werden.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
Fig. 1: einen Ablauf eines hier vorgeschlagenen Verfahrens, und
Fig. 2: eine hier vorgeschlagene Wärmepumpe.

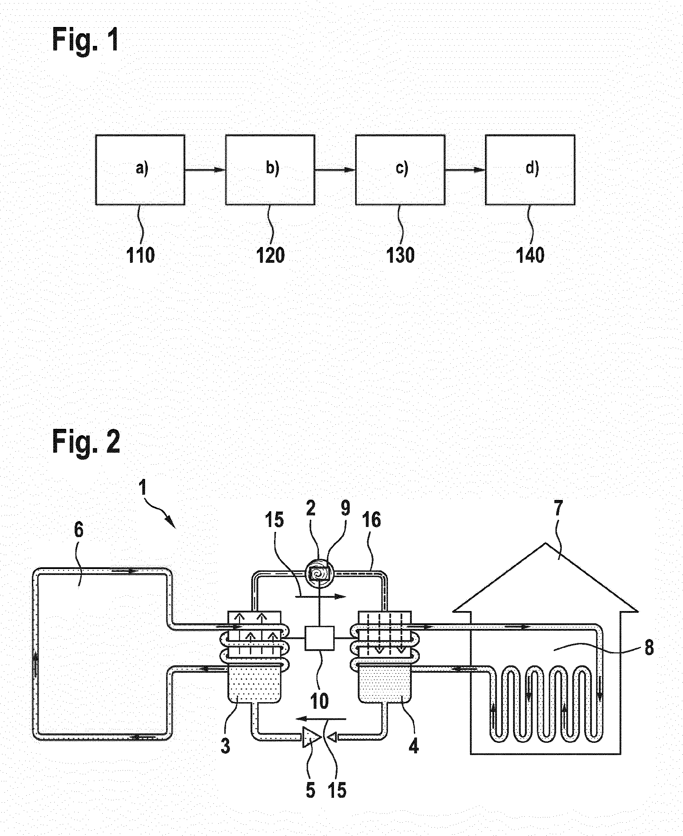

Fig. 1 zeigt beispielhaft und schematisch einen Ablauf eines hier vorgeschlagenen Verfahrens. Das Verfahren dient zum Betreiben eines Elektromotors 9 eines Verdichters 2 einer Wärmepumpe 1, insbesondere einer Reduktion der Drehmomentwelligkeit mit einhergehender Minderung der Geräuschemissionen. Die mit den Blöcken 110,120,130 und 140 dargestellte Reihenfolge der Schritte a), b), c) und b) kann sich bei der einem regulären Betriebsablauf einstellen.

In Block 110 erfolgt gemäß Schritt a) eine Inbetriebnahme des Elektromotors 9. Die Inbetriebnahme kann dabei mit Nennleistung des Elektromotors 9 erfolgen.

In Block 120 erfolgt gemäß Schritt b) ein Ermitteln eines Gegen-Drehmomentes des Verdichters 2. Das Gegen-Drehmoment kann hierzu beispielsweise im Vorfeld an einem Prüfstand mit einem Referenzverdichter ermittelt werden, insbesondere in Bezug auf verschiedene Betriebszustände des Verdichters 2, die insbesondere vom Druckverhältnis des Verdichters 2 abhängig sein können.

In Block 130 erfolgt gemäß Schritt c) erfolgt ein Ermitteln eines Drehmomentversatzes zwischen dem vom Elektromotor 9 aufgebrachtem Drehmoment und dem in Schritt b) ermittelten Gegen-Drehmoment des Verdichters 2. Hierzu kann ein vom Elektromotor 9 aufgebrachtes Drehmoment ermittelt werden, insbesondere unter Einbeziehung eines Motorstromes des Elektromotors 9.

In Block 140 erfolgt gemäß Schritt d) ein Betreiben des Elektromotors 9 derart, dass der in Schritt d) ermittelte Drehmomentversatz ausgeglichen wird. Hierfür kann der Elektromotor 9 beispielsweise mit einem Frequenzumrichter derart gesteuert werden, dass das Drehmoment innerhalb einer Umdrehung weitestgehend konstant bleibt.

Fig. 2 zeigt beispielhaft und schematisch eine hier vorgestellte Wärmepumpe 1 zur Versorgung eines Gebäudes 7 mit Wärmeenergie. Die Wärmepumpe 1 kann einen Außenteil 6, der Umgebungswärme (Aero-, Geo- und/oder Hydrothermie) aufnimmt und einen Innenteil 8 zur Abgabe der aufgenommenen Wärme im Gebäude 7, umfassen. In einem Kältemittelkreis 16 kann hierzu ein Kältemittel umgewälzt werden. In einem Verdampfer 3, der im Außenteil 6 angeordnet sein kann, kann das Kältemittel Umgebungswärme aufnehmen, verdampfen und in eine gasförmige Phase übergehen. In einem Verflüssiger (Kondensator) 4 kann das Kältemittel die aufgenommene Wärme abgeben, beispielsweise in einen Heizkreislauf des Gebäudes 7, und dabei kondensieren. Zudem können in dem Kältemittelkreis 16 ein hier vorgestellter Verdichter 2 und ein Expansionsventil 5 vorgesehen sein. Das Kältemittel kann im Kältemittelkreis 16 in einer Umwälzrichtung 15 vom Verdampfer 3 über den Verdichter 2 zum Verflüssiger 4 und weiter über das Expansionsventil 5 zurück zum Verdampfer 3 transportiert werden.

Die Wärmepumpe 1 kann mit einem Steuergerät 10 ausgerüstet sein. Das Steuergerät 10 kann mit Komponenten der Wärmepumpe 1, wie dem Verdichter 2, dem Elektromotor 9 und verschiedenen Sensoren zur Erfassung von Betriebsparametern der Wärmepumpe 1 und des Kältemittelkreises 16 verbunden sein. Das Steuergerät 10 kann dazu eingerichtet sein, ein hier vorgestelltes Verfahren durchzuführen. Hierzu kann auf einem Speicher des Steuergerätes 10 eine Funktion des Gegen-Drehmomentes des Verdichters 2, in Abhängigkeit relevanter Betriebsparameter hinterlegt sein.

### Bezugszeichenliste

- 1: Wärmepumpe
- 2: Verdichter
- 3: Verdampfer
- 4: Verflüssiger
- 5: Expansionsventil
- 6: Außenteil
- 7: Gebäude
- 8: Innenteil
- 9: Elektromotor
- 10: Steuergerät
- 15: Umwälzeinrichtung
- 16: Kältemittelkreis

## Patentansprüche

1. Verfahren zum Betreiben eines Elektromotors (9) eines Verdichters (2) einer Wärmepumpe (1) umfassend zumindest die folgenden Schritte:
a) Inbetriebnahme des Elektromotors (9),
b) Ermitteln eines Gegen-Drehmomentes des Verdichters (2), anhand eines Drucks und einer Temperatur des Kältemittels vor und nach dem Verdichter,
c) Bestimmen eines Drehmomentversatzes zwischen dem vom Elektromotor (9) aufgebrachtem Drehmoment und dem ermittelten Gegen-Drehmoment des Verdichters (2),
d) Betreiben des Elektromotors (9) derart, dass der in Schritt c) ermittelte Drehmomentversatz kompensiert wird.

2. Verfahren nach Anspruch 1, wobei ein Ermitteln des Gegen-Drehmoments in Schritt b) mittels einer Datenbank oder künstlicher Intelligenz erfolgt.

3. Verfahren nach Anspruch 2, wobei eine Nutzung künstlicher Intelligenz in Schritt b) unter Einbeziehung eines Field Programmable Gate Array (FGPA) erfolgt.

4. Verfahren nach einem der vorangehenden Ansprüche, wobei in Schritt b) eine Abschätzung des Gegen-Drehmomentes basierend auf Betriebsdaten der Wärmepumpe (1) erfolgt.

5. Verfahren nach einem der vorangehenden Ansprüche, wobei in einem Schritt e) eine Abweichung zwischen dem in Schritt b) ermittelten Gegen-Drehmoment und dem realen Gegen-Drehmoment mit einem Grenzwertbereich verglichen wird.

6. Verfahren nach Anspruch 5, wobei bei einer Abweichung zwischen dem in Schritt b) ermittelten Gegen-Drehmoment und dem realen Gegen-Drehmoment außerhalb des Grenzwertbereiches eine Information hierzu bereitgestellt oder versandt wird.

7. Computerprogramm eingerichtet zur Durchführung eines Verfahrens nach einem der vorangehenden Ansprüche.

8. Maschinenlesbares Speichermedium, auf dem das Computerprogramm nach Anspruch 7 gespeichert ist.

9. Steuergerät (10) für eine Wärmepumpe (1) eingerichtet zur Durchführung eines Verfahrens nach einem der Ansprüche 1 bis 6.

10. Wärmepumpe (1), aufweisend ein Steuergerät (10) nach Anspruch 9.
